# EUROPÄISCHE PATENTSCHRIFT

(11) **EP 3 524 782 B1**
(45) Veröffentlichungstag und Bekanntmachung des Hinweises auf die Patenterteilung: **16.06.2021**
(21) Anmeldenummer: 19156099.4
(22) Anmeldetag: 08.02.2019
(51) Int. Cl.: F01D 25/18, F02C 7/06, B33Y 80/00, B33Y 10/00

(54) **LAGERKAMMERGEHÄUSE FÜR EINE STRÖMUNGSMASCHINE**
BEARING CHAMBER HOUSING FOR A TURBOMACHINE
CARTER DE CHAMBRE DE PALIER POUR UNE TURBOMACHINE

(30) Priorität: 09.02.2018 DE 102018202083
(43) Veröffentlichungstag der Anmeldung: 14.08.2019
(73) Patentinhaber: MTU Aero Engines AG, 80995 München (DE)
(72) Erfinder: Stiehler, Frank, 04924 Bad Liebenwerda (DE); Kempinger, Georg, 85386 Eching (DE); Kraus, Jürgen, 85221 Dachau (DE); Schlothauer, Steffen, 85253 Erdweg (DE); Liebl, Christian, 85461 Bockhorn (DE); Köbke, Thomas, 82223 Eichenau (DE); Eichinger, Alois, 85276 Pfaffenhofen (DE)

(56) Entgegenhaltungen:
- EP-A1- 3 214 273
- EP-A1- 3 244 026
- EP-A2- 2 746 542
- US-A1- 2015 224 743

## Beschreibung

### Technisches Gebiet

Die vorliegende Erfindung betrifft ein Lagerkammergehäuse zum Lagern einer Welle einer Strömungsmaschine.

### Stand der Technik

Bei der Strömungsmaschine kann es sich bspw. um ein Strahltriebwerk handeln, z. B. um ein Mantelstromtriebwerk. Funktional gliedert sich die Strömungsmaschine in Verdichter, Brennkammer und Turbine. Etwa im Falle des Strahltriebwerks wird angesaugte Luft vom Verdichter komprimiert und in der nachgelagerten Brennkammer mit hinzugemischtem Kerosin verbrannt. Das entstehende Heißgas, eine Mischung aus Verbrennungsgas und Luft, durchströmt die nachgelagerte Turbine und wird dabei expandiert. Der Verdichter und die Turbine sind jeweils in der Regel aus mehreren Stufen mit jeweils einem Stator (Leitschaufelkranz) und einem Rotor (Laufschaufelkranz) aufgebaut, wobei die Rotoren der Turbine von dem Heißgas angetrieben werden. In jeder Stufe wird dem Heißgas dabei anteilig innere Energie entzogen, die in eine Bewegung des jeweiligen Laufschaufelkranzes und damit der Welle umgesetzt wird. Die Rotoren des Verdichters sind je nach Ausführungsform über eine oder mehrere Wellen mit den Rotoren der Turbine verbunden und werden von diesen zur Verrichtung der Kompressionsarbeit angetrieben.

Die Gattungsgemäße EP 3 214 273 A1 zeigt ein zweiteiliges Lagerkammergehäuse aus einem ersten stromaufwärtigen Abschnitt und einem zweiten Abschnitt, wobei die beiden Abschnitte über eine Presspassung miteinander verbunden sind, jeweils gegen die Welle abgedichtet und so den innenliegenden Ölraum radial und axial begrenzen.

Der vorliegende Gegenstand betrifft ein Lagerkammergehäuse zum Lagern einer Welle, wobei die Bezugnahme auf ein Strahltriebwerk den Erfindungsgedanken zunächst nicht in seiner Allgemeinheit beschränken soll. Bei der Strömungsmaschine kann es sich bspw. auch um eine stationäre Gasturbine handeln.

### Darstellung der Erfindung

Der vorliegenden Erfindung liegt das technische Problem zugrunde, ein besonders vorteilhaftes Lagerkammergehäuse für eine Strömungsmaschine, sowie ein vorteilhaftes Verfahren zu dessen Herstellung anzugeben.

Dies wird erfindungsgemäß mit einem Lagerkammergehäuse gemäß Anspruch 1 gelöst, sowie mit einem Verfahren zu dessen Herstellung gemäß Anspruch 6.

Das Lagerkammergehäuse ist bzw. wird zumindest weitgehend generativ aufgebaut, also anhand eines Datenmodells durch bereichsweise selektives Verfestigen eines zuvor formlosen bzw. formneutralen Stoffes erzeugt (siehe unten im Detail). Dabei wird nun aber erfindungsgemäß nicht das gesamte Lagerkammergehäuse am Stück erzeugt, sondern wird ein Deckel als für sich gesondert hergestelltes Bauteil angesetzt und materialschlüssig verbunden, insbesondere schweißverbunden. Dieser Deckel weist einen sich radial erstreckenden Kragen auf, der einen Ölraum des Lagerkammergehäuses axial begrenzt.

Der mehrteilige Aufbau mag zunächst nachteilig erscheinen, es müssen in der Fertigung mehrere Bauteile gehandhabt werden, zumal das Zusammensetzen ein Einhalten von Passungen erfordern und der Schweißvorgang Zusatzaufwand bedeuten kann. Die Erfinder haben jedoch festgestellt, dass die sich durch die mehrteilige Herstellung ergebenden Vorteile diese Nachteile überwiegen. So kann das generative Aufbauen des Gehäuseabschnitts auf dessen Geometrie hin optimiert werden, die bspw. aufgrund eines radial äußeren Befestigungsflansches (zur Montage am Gehäuse der Strömungsmaschine, siehe unten im Detail) und/oder einer oder mehrerer Aufnahmen für Rollen-/Wälzlager etc. ohnehin eine gewisse Komplexität hat. Durch das "Abtrennen" des Deckels muss somit einerseits beim Aufbau des Gehäuseabschnitts nicht (zusätzlich) der radiale Kragen berücksichtigt werden. Andererseits ergeben sich bspw. strukturmechanisch jedenfalls keine maßgeblichen Nachteile, weil im Verhältnis zum übrigen Lagerkammergehäuse der Deckel bzw. die Schnittstelle zum Gehäuseabschnitt im Betrieb nicht allzu sehr mechanisch beansprucht ist.

Bevorzugte Ausführungsformen finden sich in den abhängigen Ansprüchen und der gesamten Offenbarung, wobei in der Darstellung der Merkmale nicht immer im Einzelnen zwischen Vorrichtungs- und Verfahrens- bzw. Verwendungsaspekten unterschieden wird; jedenfalls implizit ist die Offenbarung hinsichtlich sämtlicher Anspruchskategorien zu lesen. Wird bspw. auf ein in bestimmter Weise hergestelltes Lagerkammergehäuse Bezug genommen, ist dies immer auch als Offenbarung eines entsprechenden Herstellungsverfahrens zu lesen, und umgekehrt.

Die Angaben "axial" und "radial", sowie die zugehörigen Richtungen, beziehen sich im Rahmen dieser Offenbarung auf die Drehachse der Welle, die bei Betrachtung der Strömungsmaschine im Gesamten mit deren Längsachse zusammenfällt. Um die Drehachse "umlaufend" drehen im Betrieb die Rotoren, nämlich in "Umlaufrichtung". "Ein" und "eine" sind als unbestimmte Artikel und damit ohne ausdrücklich gegenteilige Angabe immer auch als "mindestens ein" bzw. "mindestens eine" zu lesen.

Der Kragen begrenzt den Ölraum des Lagerkammergehäuses axial, also in Bezug auf eine zur Drehachse parallele Richtung. Dazu erstreckt er sich radial (und selbstverständlich umlaufend), was im Allgemeinen nicht notwendigerweise eine ausschließlich radiale Erstreckung implizieren muss, der Kragen sich bspw. auch (leicht) schräg erstrecken (nicht senkrecht zur Drehachse, sondern verkippt). Bevorzugt ist gleichwohl ein sich ausschließlich radial erstreckender Kragen. Die materialschlüssige Naht liegt bevorzugt in einer zur Drehachse senkrechten Ebene, was bspw. hinsichtlich einer möglichst gleichmäßigen Füge- bzw. Schweißfläche von Interesse sein kann.

Das generative Aufbauen des Gehäuseabschnitts kann allgemein im Vergleich zu einer gießtechnischen Herstellung bspw. komplexere Geometrien zugänglich machen bzw. auch Wandstärken reduzieren helfen. So lassen sich bspw. die Wandstärken der Schale(n) des Gehäuseabschnitts nach dem strukturmechanischen Anforderungsprofil bemessen und damit im Vergleich zu einem Gussteil reduzieren, was eine Gewichtsersparnis ergibt (im Falle des Ausführungsbeispiels von bspw. rund 200 g). Im Falle eines Flugtriebwerks kann dies hinsichtlich des Kerosinverbrauchs von Vorteil sein. Zwischen dem generativen Aufbauen und dem Verschweißen kann es auch eine vorteilhafte Wechselwirkung dahingehend geben, dass die generative Herstellung dünne Wände ermöglicht, woraus kleine Fügeflächen und damit eine gute Schweißbarkeit resultieren.

Bei einer bevorzugten Ausführungsform ist bzw. wird auch der Deckel generativ aufgebaut. Aufgrund der zu dem Gehäuseabschnitt mehrteiligen Herstellung kann beim Aufbauen des Deckels eine Aufbaurichtung frei gewählt werden, bevorzugt sogar genau entgegengesetzt zu jener des Gehäuseabschnitts liegen (siehe unten im Detail). Im Allgemeinen ist jedoch ein generatives Aufbauen des Deckels nicht zwingend, dieser könnte bspw. auch als Gussteil an den generativ aufgebauten Gehäuseabschnitt gesetzt werden.

Erfindungsgemäß weist der Deckel einen äußeren Hülsabschnitt auf, an dem der Kragen nach radial innen hervortritt. Es wird dann ein axiales Ende dieses Hülsabschnitts mit dem Gehäuseabschnitt verschweißt, ist dort also die materialschlüssige Naht angeordnet. Bevorzugt ist der Kragen am axial entgegengesetzten Ende des Hülsabschnitts angeordnet (bilden Hülsabschnitt und Kragen in einem Axialschnitt betrachtet also bspw. keine T-, sondern eine L-Form).

Bei einer bevorzugten Ausführungsform weist der Gehäuseabschnitt eine oder mehrere jeweils hülsenförmige Schalen auf. Soweit generell auf eine Hülsenform Bezug genommen wird, betrifft dies in der Regel eine hohlzylindrische, mit der Drehachse der Welle koaxiale Form (die also in einem Schnitt senkrecht zur Drehachse kreisförmig ist, zumindest im Wesentlichen). Erfindungsgemäß weist der Gehäuseabschnitt eine radial äußere und radial innerhalb davon eine radial innere Schale auf, wobei letztere zur Aufnahme des Lagers vorgesehen ist, wobei die materialschlüssige Naht zwischen dem äußeren Hülsabschnitt des Deckels und der radial äußeren Schale des Gehäuseabschnitts angeordnet ist. Die radial äußere Schale kann bspw. als Außenwand des Lagerkammergehäuses einen Ölraum nach radial außen begrenzen, welcher das Lager umgibt (das radial außerhalb des Lagers angeordnete Öl kann eine gewisse Abschirmung zum Heißgaskanal hin schaffen und bspw. Temperaturgradienten und damit mechanische Verspannungen reduzieren helfen). Vorliegend wird jedenfalls der Hülsabschnitt des Deckels dann mit der äußeren Schale des Gehäuseabschnitts verschweißt. Die Teilung zum Gehäuseabschnitt ist damit in einem mechanisch weniger belasteten Bereich davon angeordnet, etwa im Vergleich zu der das Lager tragenden inneren Schale.

Bei einer bevorzugten Ausführungsform weist der Deckel einen inneren Hülsabschnitt auf, der sich am radial inneren Umfang des Kragens von diesem axial weg erstreckt. Dieser innere Hülsabschnitt bildet einen Dichtungsträger, kann also bspw. eine zum Dichten gegen die Welle vorgesehene Gleitdichtung aufnehmen. Bevorzugt weist der Deckel sowohl den äußeren als auch den inneren Hülsabschnitt auf, hat er also dann in einem Axialschnitt betrachtet insbesondere eine U-Form.

In bevorzugter Ausgestaltung ist an dem Gehäuseabschnitt ein nach radial außen hervortretender Befestigungsflansch angeordnet, der der Befestigung des Lagerkammergehäuses und damit der gesamten Lageranordnung in der Strömungsmaschine dient. Der Befestigungsflansch muss also relativ große Kräfte aufnehmen, was sich aufgrund der generativen Herstellung besonders vorteilhaft bei der Auslegung berücksichtigen lässt. So können sich von der äußeren Schale des Gehäuseabschnitts weg erstreckende Stege bzw. Streben des Befestigungsflansches bspw. anhand strukturmechanischer Simulationen optimiert sein bzw. werden. Sie können bspw. eine variable Dicke und/oder angepasste Neigung relativ zur Drehachse haben, um eine gewisse Federwirkung zu erreichen. Dies kann einen Ausgleich von Schwingungen erlauben (die entstehen können, weil das Lager eine Verbindungsstelle zwischen Statoren und Rotoren darstellt). Die Vorteile der generativen Herstellung können hier also im Besonderen zum Tragen kommen.

Die Erfindung betrifft auch ein Turbinenzwischengehäuse für eine Strömungsmaschine mit einem Lagerkammergehäuse nach einem der Ansprüche 1-4.

Das Turbinenzwischengehäuse kann im Allgemeinen auch zwischen der Brennkammer und der/den Turbinenmodul(en) angeordnet werden, bevorzugt ist es zum Anordnen zwischen zwei Turbinenmodulen ausgelegt, z. B. zwischen Hochdruck und Mittel- bzw. Niederdruckturbine. In dem Lagerkammergehäuse kann bzw. können dann ein oder mehrere Lager zum Führen der Welle angeordnet sein, etwa im Falle des Ausführungsbeispiels ein Kugel- und ein Wälzlager. Dabei nimmt der Gehäuseabschnitt das/die Lager auf, bevorzugt sind sämtliche Lager der Lagerkammer von dem Gehäuseabschnitt aufgenommen. Der Deckel trägt bevorzugt eine Gleitringdichtung.

Wie bereits erwähnt, betrifft die Erfindung auch Verfahren zum Herstellen eines Lagerkammergehäuse nach einem der Ansprüche 1-4 oder eines Turbinengehäuses nach Anspruch 5. Dabei wird der Gehäuseabschnitt des Lagerhammergehäuses generativ aufgebaut und dann der Deckel als separates Bauteil angesetzt und mit dem Gehäuseabschnitt verschweißt. Bevorzugt wird auch der Deckel generativ aufgebaut, und zwar besonders bevorzugt mit einer Aufbaurichtung, die jener des Gehäuseabschnitts entgegengesetzt liegt (bezogen auf die Orientierung der zusammengesetzten Bauteile). Generell, sowohl im Falle des Gehäuseabschnitts als auch des Deckels, erfolgt das generative Aufbauen bevorzugt in einem Pulverbettverfahren. Der Werkstoff, aus dem der Gehäuseabschnitt bzw. der Deckel hergestellt wird, wird dabei in Pulverform sequenziell Schicht für Schicht aufgetragen, wobei je Schicht selektiv ein anhand des Datenmodells (der Bauteilgeometrie, siehe vorne) vorbestimmter Bereich verfestigt wird. Die Verfestigung erfolgt durch ein Aufschmelzen mittels einer Strahlquelle, wobei im Allgemeinen bspw. auch eine Elektronenstrahlquelle denkbar ist. Bevorzugt wird mit einer Laserquelle, also einem Laserstrahl aufgeschmolzen, ist das generative Aufbauen also ein selektives Laserschmelzen (SLM).

In bevorzugter Ausgestaltung liegt die Aufbaurichtung des Gehäuseabschnitts relativ zur Trennfläche zwischen Gehäuseabschnitt und Deckel derart, dass sich die Trennfläche nicht über mehrere Schichten erstreckt. Die gesamte Trennfläche liegt in genau einer der Schichten, was eine weitgehend gleichmäßige und damit gut schweißbare Oberfläche ergibt. Wird bevorzugt auch der Deckel generativ aufgebaut, wird dessen Aufbaurichtung vorzugsweise ebenfalls so gewählt, dass die Trennfläche in genau einer der Schichten liegt. Egal ob Deckel oder Gehäuseabschnitt, kann die fragliche Schicht die letzte tatsächlich aufgebaute Schicht sein, es können aber andererseits auch noch einige Schichten darüber liegen, wenn nämlich nach dem generativen Aufbauen noch mechanisch nachbearbeitet wird.

Soweit beim generativen, schichtweisen Aufbauen des Gehäuseabschnitts und/oder des Deckels ein Überhang entsteht, wird dieser in bevorzugter Ausgestaltung begrenzt. Ein etwaiger Überhang soll mit den Schichten einen Winkel von höchstens 60° einschließen, in der Reihenfolge der Nennung zunehmend bevorzugt höchstens 50°, 40° bzw. 30°. Generell ist selbstverständlich ein Vermeiden von Überhängen bevorzugt (0°), was aber nicht immer möglich ist. Betrachtet wird hierbei der Winkel, den eine im Bereich des Überhangs in die Bauteiloberfläche gelegte Flächennormale mit den Schichten einschließt, konkret mit einer Ebene, die eine Grenzfläche zwischen zwei zuvor verfestigten Schichten beinhaltet.

Bei einer bevorzugten Ausführungsform werden der Gehäuseabschnitt und der Deckel jeweils mechanisch nachbearbeitet, bevor sie miteinander verschweißt werden. Dies kann insbesondere die Fügeflächen betreffen und die Schweißbarkeit verbessern helfen. Alternativ oder zusätzlich kann am Deckel bspw. auch eine radial innere Wand des inneren Hülsabschnitts, die dann die Gleitringdichtung aufnimmt, nachbearbeitet werden und/oder kann der Kragen "von innen" nachbearbeitet werden, was vor dem Verschweißen möglich ist. Im Falle des Gehäuseabschnitts kann bspw. die innere, zur Aufnahme des Lagers vorgesehene Schale nachbearbeitet werden, es können insbesondere Nuten etc. zur Lagerfixierung eingebracht werden. Ferner kann bspw. auch im Bereich eines Überhangs, etwa beim Befestigungsflansch, zur Begrenzung dieses Überhangs mit aufgebautes Material abgetragen werden. Generell ergibt sich mit der Nachbearbeitung ein gewisser Materialabtrag, es ist bspw. ein Fräsen, Drehen oder Räumen möglich, aber bspw. auch ein Schleifen.

In bevorzugter Ausgestaltung werden der Deckel und der Gehäuseabschnitt mittels Elektronenstrahlschweißen miteinander verschweißt. Alternativ wäre im Allgemeinen bspw. auch ein Reibschweißen denkbar.

Die Erfindung betrifft auch die Verwendung eines Lagerkammergehäuses nach einem der Ansprüche 1 bis 4 oder eines Turbinenzwischengehäuses nach Anspruch 5 für eine Strömungsmaschine, insbesondere für ein Strahltriebwerk. Das Lagerkammergehäuse nimmt dann die Welle der Strömungsmaschine auf, diese rotiert im Betrieb um die Drehachse, der Ölraum des Lagerkammergehäuses ist mit Öl gefüllt.

### Kurze Beschreibung der Zeichnungen

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Fig. 1: ein Strahltriebwerk in einem Axialschnitt;
- Fig. 2: ein erfindungsgemäßes Lagerkammergehäuse in einer axial geschnittenen Seitenansicht;
- Fig. 3: ein Zwischenstadium in der Herstellung des Lagerkammergehäuses gemäß Fig. 2.

### Bevorzugte Ausführungen der Erfindung

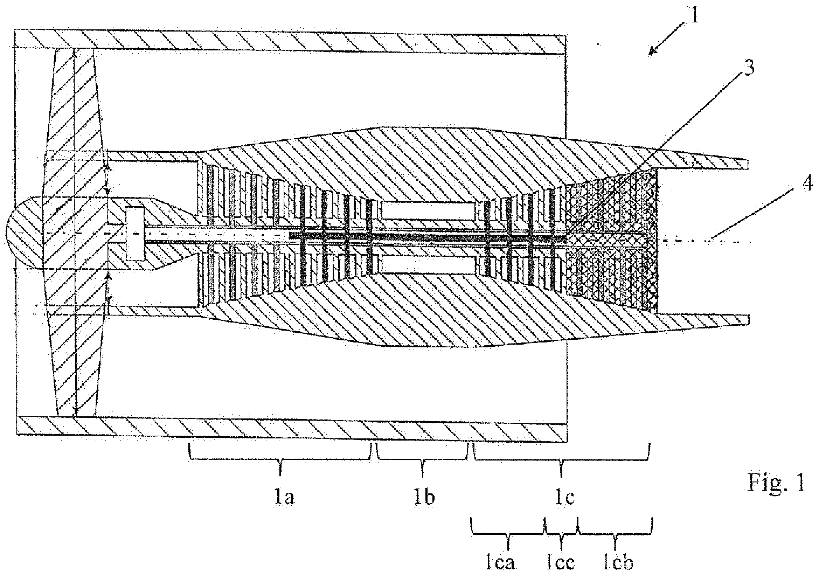

**Fig. 1** zeigt eine Strömungsmaschine 1 in schematischer Ansicht, konkret ein Strahltriebwerk. Die Strömungsmaschine 1 gliedert sich funktional in Verdichter 1a, Brennkammer 1b und Turbine 1c. Sowohl der Verdichter 1a als auch die Turbine 1c sind vorliegend jeweils aus zwei Modulen aufgebaut. Zwischen einem der Brennkammer 1b unmittelbar nachgelagerten Hochdruckturbinenmodul 1ca und einem Nieder- bzw. Mitteldruckturbinenmodul 1cb findet sich das Turbinenzwischengehäuse 1cc. Die Rotoren der Turbinenmodule 1ca, cb drehen jeweils auf einer Welle 3 um eine Drehachse 4. In dem Turbinenzwischengehäuse 1cc ist bzw. sind Lager für diese Welle 3 angeordnet.

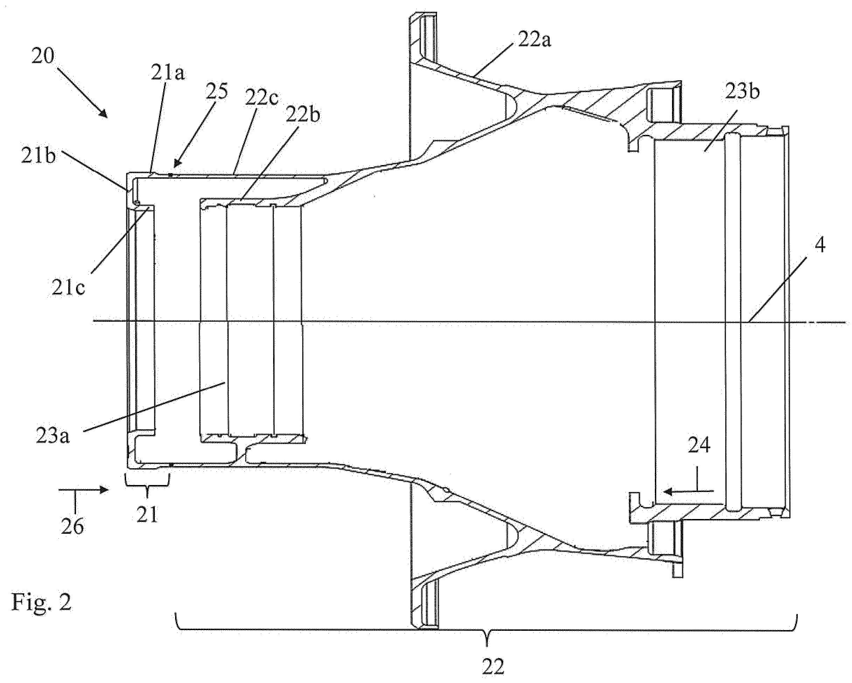

**Fig. 2** zeigt ein erfindungsgemäßes Lagerkammergehäuse 20. Dieses weist einen Gehäuseabschnitt 22 auf, in dem zwei Aufnahmen 23 für Lager (der Übersichtlichkeit halber nicht dargestellt) ausgebildet sind. Die eine Aufnahme 23a nimmt ein Wälzlager auf, die andere Aufnahme 23b ein Kugellager. In diesen Lagern ist die Welle 3 dann drehbar geführt.

Der Gehäuseabschnitt 22 ist ein generativ in einem Pulverbettverfahren aufgebautes Bauteil, wobei die Aufbaurichtung 24 in Fig. 2 von rechts nach links weist. Der Deckel 21 wird dabei nicht mit aufgebaut, sondern wird für sich hergestellt und über eine materialschlüssige Naht, in dem vorliegenden Ausführungsbeispiel über eine Schweißnaht 25, mit dem Gehäuseabschnitt 22 verbunden. Die Herstellung des Deckels 21 erfolgt ebenfalls in einem Pulverbettverfahren, wobei die Aufbaurichtung 26 jener des Gehäuseabschnitts 22 entgegengesetzt liegt.

Mit diesem zweiteiligen Aufbau kann einerseits einer Geometrie des Gehäuseabschnitts 22 Rechnung getragen werden, dieser weist bspw. zusätzlich außenseitig einen Befestigungsflansch 22a zur Befestigung des Lagerkammergehäuses im Turbinenzwischengehäuse 1cc auf. Der Deckel 21 gliedert sich in einen äußeren Hülsabschnitt 21a, einen sich von diesem nach radial innen weg erstreckenden Kragen 21b und einen inneren Hülsabschnitt 21c. Indem die Aufbaurichtung 26 des Deckels 21 zur Aufbaurichtung 24 des Gehäuseabschnitts 22 entgegengesetzt gewählt wird (in Fig. 2 von links nach rechts), also mit dem Kragen 21b beginnend aufgebaut wird, kann der Deckel 21 im Prinzip frei von Überhängen aufgebaut werden. Bei einem einteiligen Aufbau hingegen wäre seine Innenseite auch kaum für eine mechanische Nachbearbeitung zugänglich, ließen sich also Stützstrukturen etc. schlecht entfernen.

Der innere Hülsabschnitt 21c des Deckels 21 nimmt eine Gleitringdichtung (nicht dargestellt) auf, die dann gegen die Welle 3 dichtet. Der Kragen 21b begrenzt einen Ölraum 27 axial. Ist das Lagerkammergehäuse 20 mit Öl gefüllt, umgibt dieses auch die Aufnahme 23a, umschließt es also das Wälzlager (was eine gewisse thermische Abschirmung schafft). Es ist somit auch zwischen einer inneren Schale 22b, welche die Aufnahme 23a bildet, und einer äußeren Schale 22c des Gehäuseabschnitts 22 Öl angeordnet. Die Schweißnaht 25 findet sich zwischen dem äußeren Hülsabschnitt 21a des Deckels 21 und der Schale 22c des Gehäuseabschnitts 22. Die Teilung zwischen Deckel 21 und Gehäuseabschnitt 22 ist derart in das Lagerkammergehäuse 20 gelegt, dass die mechanische Beanspruchung der Schweißnaht 25 minimiert wird. Aufgrund der generativen Herstellung sind die Wanddicken des äußeren Hülsabschnitts 21a und der äußeren Schale 22c auch vergleichsweise gering, was hinsichtlich der Fügefläche von Vorteil ist, die ebenfalls klein bleibt.

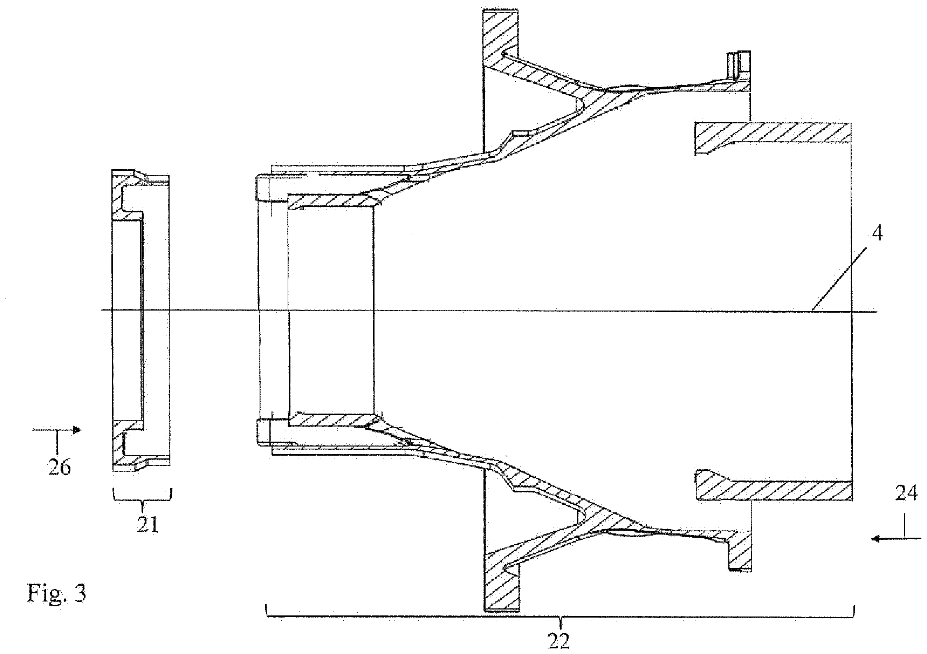

**Fig. 3** zeigt den Deckel 21 und den Gehäuseabschnitt 22 unmittelbar nach dem generativen Aufbauen. Vor dem Verschweißen werden die beiden Bauteile jeweils noch mechanisch nachbearbeitet, so werden bspw. in die Aufnahmen 23a,b die Nuten eingedreht und wird auch generell von den generativ erzeugten Flächen Material abgetragen, was die Oberflächengüten erhöhen und damit das Risiko initialer Rissstellen verringern kann. Auch insoweit zeigt sich ein Vorteil des zweiteiligen Aufbaus, die Oberflächen der Bauteile sind vor dem Zusammensetzen besser zugänglich. Letzteres gilt auch hinsichtlich einer Inspektion, es ist bspw. eine Sichtkontrolle der Oberflächen einfacher.

### BEZUGSZEICHENLISTE

| | |
|---|---|
| Strömungsmaschine | 1 |
| Verdichter | 1a |
| Brennkammer | 1b |
| Turbine | 1c |
| Hochdruckturbinenmodul | 1ca |
| Nieder- bzw. Mitteldruckturbinenmodul | 1cb |
| Turbinenzwischengehäuse | 1cc |
| Welle | 3 |
| Drehachse | 4 |
| Lagerkammergehäuse | 20 |
| Deckel | 21 |
| Äußerer Hülsabschnitt | 21a |
| Kragen | 21b |
| Innerer Hülsabschnitt | 21c |
| Gehäuseabschnitt | 22 |
| Befestigungsflansch | 22a |
| Innere Schale | 22b |
| Äußere Schale | 22c |
| Aufnahmen | 23 |
| Aufnahme (Wälzlager) | 23a |
| Aufnahme (Kugellager) | 23b |
| Aufbaurichtung (Gehäuseabschnitt) | 24 |
| materialschlüssige Naht | 25 |
| Aufbaurichtung (Deckel) | 26 |
| Ölraum | 27 |

## Patentansprüche

1. Lagerkammergehäuse (20) zum Lagern einer Welle (3) einer Strömungsmaschine (1), mit
einem generativ aufgebauten Gehäuseabschnitt (22) und
einem Deckel (21), welcher, jeweils bezogen auf eine Drehachse (4) der Welle (3), axial an den Gehäuseabschnitt (22) anschließt und einen sich radial erstreckenden Kragen (21b) aufweist, welcher Kragen (21) einen Ölraum (27) des Lagerkammergehäuses (22) axial begrenzt,
**dadurch gekennzeichnet,**
**dass** der Deckel (21) mit dem Gehäuseabschnitt (22) zusammengesetzt und über eine materialschlüssige Naht (25), insbesondere über eine Schweißnaht (25), damit verbunden ist,
**dass** der Deckel (21) einen äußeren Hülsabschnitt (21a) aufweist, an welchem der Kragen (21b) nach radial innen hervortritt, wobei die materialschlüssige Naht (25) axial endseitig an dem Hülsabschnitt (21a) angeordnet ist, und
**dass** der Gehäuseabschnitt (22) eine hülsenförmige, radial äußere Schale (22c) aufweist und radial innerhalb davon eine hülsenförmige, zur Aufnahme eines Lagers vorgesehene radial innere Schale (22b) aufweist, wobei die materialschlüssige Naht (25) zwischen dem äußeren Hülsabschnitt (21a) des Deckels (21) und der radial äußeren Schale (22c) des Gehäuseabschnitts (22) angeordnet ist.

2. Lagerkammergehäuse (20) nach Anspruch 1, bei welchem auch der Deckel (21) generativ aufgebaut ist.

3. Lagerkammergehäuse (20) nach einem der vorstehenden Ansprüche, bei welchem der Deckel (21) einen inneren Hülsabschnitt (21c) aufweist, der sich an einem radial inneren Umfang des Kragens (21b) von dem Kragen (21b) axial weg erstreckt und einen Dichtungsträger bildet.

4. Lagerkammergehäuse (20) nach einem der vorstehenden Ansprüche, bei welchem der Gehäuseabschnitt (22) einen nach radial außen hervortretenden Befestigungsflansch (22a) aufweist.

5. Turbinenzwischengehäuse (1cc) für eine Strömungsmaschine (1) mit einem Lagerkammergehäuse (20) nach einem der vorstehenden Ansprüche.

6. Verfahren zum Herstellen eines Lagerkammergehäuses (20) nach einem der Ansprüche 1 bis 4 oder eines Turbinenzwischengehäuses (1cc) nach Anspruch 5, bei welchem Verfahren zunächst der Gehäuseabschnitt (22) generativ aufgebaut wird und dann der Deckel (21) mit dem Gehäuseabschnitt (22) zusammengesetzt und damit verschweißt wird.

7. Verfahren nach Anspruch 6, bei welchem der Gehäuseabschnitt (22) und der Deckel (21) jeweils in einem Pulverbettverfahren Schicht für Schicht generativ aufgebaut werden, wobei die materialschlüssige Naht (25) und damit eine Trennfläche zwischen dem Gehäuseabschnitt (22) und dem Deckel (21) derart in dem Lagerkammergehäuse (20) liegt, dass sich die Trennfläche ausschließlich in genau einer der Schichten erstreckt.

8. Verfahren nach Anspruch 6 oder 7, bei welchem auch der Deckel (21) generativ aufgebaut wird.

9. Verfahren nach Anspruch 8, bei welchem der Deckel (21) mit einer Aufbaurichtung (26) aufgebaut wird, die bezogen auf eine Orientierung des Gehäuseabschnitts (22) und des Deckels (21) relativ zueinander im zusammengesetzten Zustand, einer Aufbaurichtung (24), mit welcher der Gehäuseabschnitt (22) generativ aufgebaut wird, entgegengesetzt liegt.

10. Verfahren nach einem der Ansprüche 6 bis 9, bei welchem der Gehäuseabschnitt (22) und/oder der Deckel (21) in einem Pulverbettverfahren Schicht für Schicht generativ aufgebaut wird, wobei, soweit bei dem generativen Aufbauen ein Überhang entsteht, dieser Überhang mit den Schichten einen Winkel von höchstens 60° einschließt.

11. Verfahren nach einem der Ansprüche 6 bis 10, bei welchem der Gehäuseabschnitt (22) und/oder der Deckel (21) mechanisch nachbearbeitet wird, bevor der Deckel (21) mit dem Gehäuseabschnitt (22) verschweißt wird.

12. Verfahren nach einem der Ansprüche 6 bis 10, bei welchem der Deckel (21) durch Elektronenstrahlschweißen mit dem Gehäuseabschnitt (22) verschweißt wird.

13. Verwendung eines Lagerkammergehäuses (22) nach einem der Ansprüche 1 bis 4 oder eines Turbinenzwischengehäuses (1cc) nach Anspruch 5 für eine Strömungsmaschine (1), insbesondere ein Strahltriebwerk.

## Claims

1. Bearing chamber housing (20) for supporting a shaft (3) of a turbomachine (1), comprising an additively constructed housing portion (22) and a cover (21) which, in each case with respect to an axis of rotation (4) of the shaft (3), axially adjoins the housing portion (22) and has a radially extending collar (21b), which collar (21) axially delimits an oil chamber (27) of the bearing chamber housing (22),
**characterized in that**
the cover (21) is assembled with the housing portion (22) and is connected thereto via an integral seam (25), in particular via a weld seam (25),
**in that** the cover (21) has an outersleeve portion (21a) on which the collar (21b) protrudes radially inward, the integral seam (25) being arranged axially at the end of the sleeve portion (21a), and
**in that** the housing portion (22) has a sleeve-shaped, radially outer shell (22c) and, radially inside said outer shell, has a sleeve-shaped, radially innershell (22b) provided for receiving a bearing, the integral seam (25) being arranged between the outer sleeve portion (21a) of the cover (21) and the radially outer shell (22c) of the housing portion (22).

2. Bearing chamber housing (20) according to claim 1, wherein the cover (21) is also additively constructed.

3. Bearing chamber housing (20) according to either of the preceding claims, wherein the cover (21) has an inner sleeve portion (21c) which extends axially away from the collar (21b) on a radially inner circumference of the collar (21 b) and forms a seal carrier.

4. Bearing chamber housing (20) according to any of the preceding claims, wherein the housing portion (22) has a fastening flange (22a) protruding radially outward.

5. Intermediate turbine housing (1cc) for a turbomachine (1) having a bearing chamber housing (20) according to any of the preceding claims.

6. Method for producing a bearing chamber housing (20) according to any of claims 1 to 4 or an intermediate turbine housing (1cc) according to claim 5, in which method the housing portion (22) is first additively constructed and the cover (21) is then assembled with the housing portion (22) and welded thereto.

7. Method according to claim 6, in which the housing portion (22) and the cover (21) are each additively constructed layer by layer in a powder bed process, wherein the integral seam (25), and thus a separating surface between the housing portion (22) and the cover (21), is located in the bearing chamber housing (20) in such a way that the separating surface extends exclusively in exactly one of the layers.

8. Method according to either claim 6 or claim 7, in which the cover (21) is also additively constructed.

9. Method according to claim 8, in which the cover (21) is constructed in a construction direction (26) which, based on an orientation of the housing portion (22) and the cover (21) relative to one another in the assembled state, is opposite a construction direction (24) in which the housing portion (22) is additively constructed.

10. Method according to any of claims 6 to 9, in which the housing portion (22) and/or the cover (21) is additively constructed layer by layer in a powder bed process, wherein, if an overhang is produced during the additive construction, said overhang incl udes an angle of at most 60° with the layers.

11. Method according to any of claims 6 to 10, in which the housing portion (22) and/or the cover (21) is mechanically finished before the cover (21) is welded to the housing portion (22).

12. Method according to any of claims 6 to 10, in which the cover (21) is welded to the housing portion (22) by electron beam welding.

13. Use of a bearing chamber housing (22) according to any of claims 1 to 4 or of an intermediate turbine housing (1cc) according to claim 5 for a turbomachine (1), in particular a jet engine.

## Revendications

1. Carter de chambre de palier (20) permettant de supporter un arbre (3) d'une turbomachine (1), comportant
une section de carter (22) conçue de manière générative et
un couvercle (21) qui, respectivement par rapport à un axe de rotation (4) de l'arbre (3), jouxte la section de carter (22) de manière axiale et présente un collet (21b) s'étendant de manière radiale, lequel collet (21) délimite de manière axiale un réservoirà huile (27) du carter de chambre de palier (22),
**caractérisé en ce**
**que** le couvercle (21) est assemblé avec la section de carter (22) et est relié à celle-ci par l'intermédiaire d'un joint par liaison de matière (25), en particulier par l'intermédiaire d'un joint soudé (25),
**que** le couvercle (21) présente une section de manchon externe (21a) sur laquelle le collet (21b) fait saillie de manière radiale vers l'intérieur, le joint par liaison de matière (25) étant disposé de manière axiale à l'extrémité de la section de manchon (21a), et
**que** la section de carter (22) présente une coque (22c) radialement extérieure en forme de manchon et, radialement à l'intérieur de celle-ci, une coque (22b) radialement intérieure en forme de manchon prévue pour recevoir un palier, le joint par liaison de matière (25) étant agencé entre la section de manchon externe (21a) du couvercle (21) et la coque radialement extérieure (22c) de la section de carter (22).

2. Carter de chambre de palier (20) selon la revendication 1, dans lequel le couvercle (21) est également conçu de manière générative.

3. Carter de chambre de palier (20) selon l'une des revendications précédentes, dans lequel le couvercle (21) présente une section de manchon interne (21c) qui s'étend de manière axiale à distance du collet (21 b) sur une circonférence radialement intérieure du collet (21b) et forme un support d'étanchéité.

4. Carter de chambre de palier (20) selon l'une des revendications précédentes, dans lequel la section de carter (22) présente une bride de fixation (22a) faisant saillie de manière radiale vers l'extérieur.

5. Carter intermédiaire de turbine (1cc) pourune turbomachine (1) comportant un carterde chambre de palier (20) selon l'une des revendications précédentes.

6. Procédé permettant de fabriquer un carter de chambre de palier (20) selon l'une des revendications 1 à 4 ou un carter de turbine intermédiaire (1cc) selon la revendication 5, selon lequel la section de carter (22) est d'abord conçue de manière générative, puis le couvercle (21) est assemblé avec la section de carter (22) et soudé à celle-ci.

7. Procédé selon la revendication 6, selon lequel la section de carter (22) et le couvercle (21) sont respectivement conçus de manière générative couche parcouche lors d'un procédé par lit de poudre, le joint par liaison de matière (25) ainsi qu'une surface de séparation entre la section de carter (22) et le couvercle (21) se trouvent dans le carter de chambre de palier (20) de telle sorte que la surface de séparation s'étend uniquement dans exactement l'une des couches.

8. Procédé selon la revendication 6 ou 7, selon lequel le couvercle (21) est également conçu de manière générative.

9. Procédé selon la revendication 8, selon lequel le couvercle (21) est conçu avec une direction de construction (26) qui, par rapport à une orientation de la section de carter (22) et du couvercle (21) l'un par rapport à l'autre à l'état assemblé, est opposée à une direction de construction (24) avec laquelle la section de carter (22) est conçue de manière générative.

10. Procédé selon l'une des revendications 6 à 9, selon lequel la section de carter (22) et/ou le couvercle (21) sont conçus de manière générative couche par couche lors d'un procédé par lit de poudre, un surplomb comprenant un angle de 60 ° au maximum avec les couches si ledit surplomb se produit pendant la conception générative.

11. Procédé selon l'une des revendications 6 à 10, selon lequel la section de carter (22) et/ou le couvercle (21) sont retravaillés mécaniquement avant que le couvercle (21) ne soit soudé à la section de carter (22).

12. Procédé selon l'une des revendications 6 à 10, selon lequel le couverde (21) est soudé à la section de carter (22) par soudage par bombardement électronique.

13. Utilisation d'un carter de chambre de palier (22) selon l'une des revendications 1 à 4 ou d'un carter intermédiaire de turbine (1 cc) selon la revendication 5 pour une turbomachine (1), en particulier un moteur à réaction.
